# EUROPEAN PATENT APPLICATION

(11) **EP 4 685 017 A1**
(43) Date of publication of application: **28.01.2026**
(21) Application number: 25190233.4
(22) Date of filing: 17.07.2025
(51) Int. Cl.: B60R 21/34

(54) **APPLIQUE ASSEMBLY FOR REDUCING PEDESTRIAN HEAD IMPACT INJURIES ON THE FRONT END OF A PASSENGER CAR**

(30) Priority: 24.07.2024 US 202418782392
(71) Applicant: FCA US LLC, Auburn Hills, MI 48326 (US)
(72) Inventor: KATAKAM, VNP Ramarao, Tamil Nadu, Chennai (IN); PAWARGI, Darshan S., Tamil Nadu, Chennai (IN); RAJAPUT, Mangalsing R., Tamil Nadu, Chennai (IN); QIN, Zheng, Auburn Hills, MI, 48326 (US); KOEHLER, Duane A., Auburn Hills, MI, 48326 (US); EKAMBARAM, Somasundharam, Windsor, Ontario, N9A 5K3 (CA); KOPF, Ryan, Auburn Hills, MI, 48326 (US); EL-HOR, Hassan, Auburn Hills, MI, 48326 (US)
(74) Representative: Kuhnen & Wacker Patent- und Rechtsanwaltsbüro PartG mbB

(57) **Abstract**

An applique assembly (20) for a vehicle includes an elongated structural member (40), an inner member (60) coupled to the elongated structural member (40) and an outer member (22) fixedly coupled to the inner member (60) at locations through the elongated structural member (40). The elongated structural member (40) is disposed at least partially between the inner member (60) and the outer member (22).

## Description

### FIELD

The present disclosure relates generally to crash components for an automotive vehicle and, more specifically, to an applique assembly that reduces the energy of a head impact on the front of the vehicle.

### BACKGROUND

This section provides background information related to the present disclosure which is not necessarily prior art.

Many countries have implemented higher test standards for impacts to the front of the vehicle. One area of regulation is the head injury criteria (HIC) for the front of a vehicle. The design of many vehicles has a hood or bonnet at the front thereof. Between the hood and the forward facing surfaces of the vehicle is an applique. Below the applique may be part of the front fascia that includes the headlights and the like. The front applique may be in a head impact zone for a child. In vehicles without an applique, a wraparound hood may be implemented that meets the head impact standards. However, it has been found that vehicles having an applique may not meet the head impact requirements.

### SUMMARY

This section provides a general summary of the disclosure, and is not a comprehensive disclosure of its full scope or all of its features.

An applique assembly for a vehicle includes an elongated structural member, an inner member coupled to the elongated structural member and an outer member fixedly coupled to the inner member at locations through the elongated structural member. The elongated structural member is disposed at least partially between the inner member and the outer member.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Fig. 1 is a perspective view of a vehicle having the applique assembly according to the present disclosure.
Fig. 2A is an underside view of the applique assembly.
Fig. 2B is a top side view of the applique.
Fig. 2C is a top view of the elongated structural member of the applique assembly.
Fig. 2D is a top view of the inner member of the applique assembly.
Fig. 3A is a perspective view of sonic guns for welding the inner member 60 to the outer member 22.
Fig. 3B is a close up view of the sonic weld guns of Fig. 3A.
Fig. 4 is a cross sectional view of the front portion of the vehicle having the applique assembly.
Fig. 5A is an enlarged cross-sectional view of the applique relative to the section illustrated in Fig. 2A.
Fig. 5B is another cross sectional view of the applique assembly in a different position of Fig. 2A.
Fig. 6 is a top view of the applique fastened to a cross member by fasteners.

Corresponding reference numerals indicate corresponding parts throughout the several views of the drawings.

### DETAILED DESCRIPTION

Example embodiments will now be described more fully with reference to the accompanying drawings.

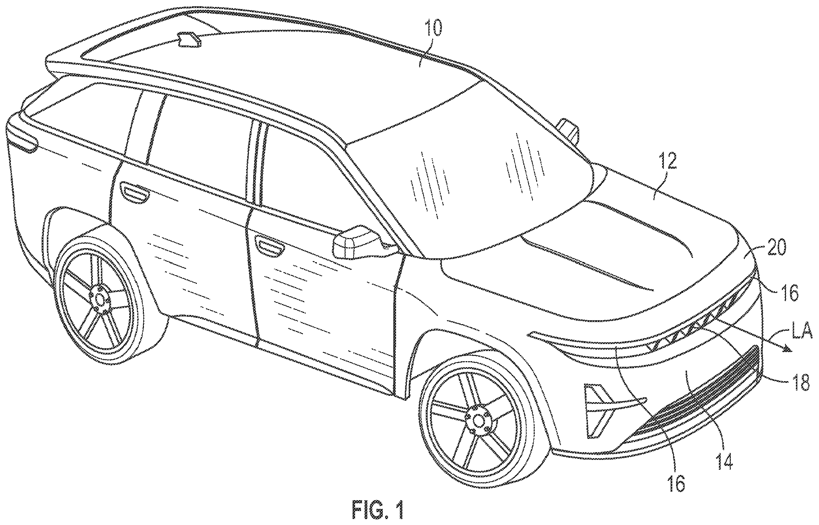

Referring now to Fig. 1, a vehicle 10 is illustrated as having a bonnet or a hood 12. The vehicle 10 has a front fascia 14 that houses headlights 16 and a decorative surface 18 that may be a grille in a battery electric vehicle. The hood 12 may be frunk door in a battery electric vehicle. An applique assembly 20 is disposed between the fascia 14 and the hood 12.

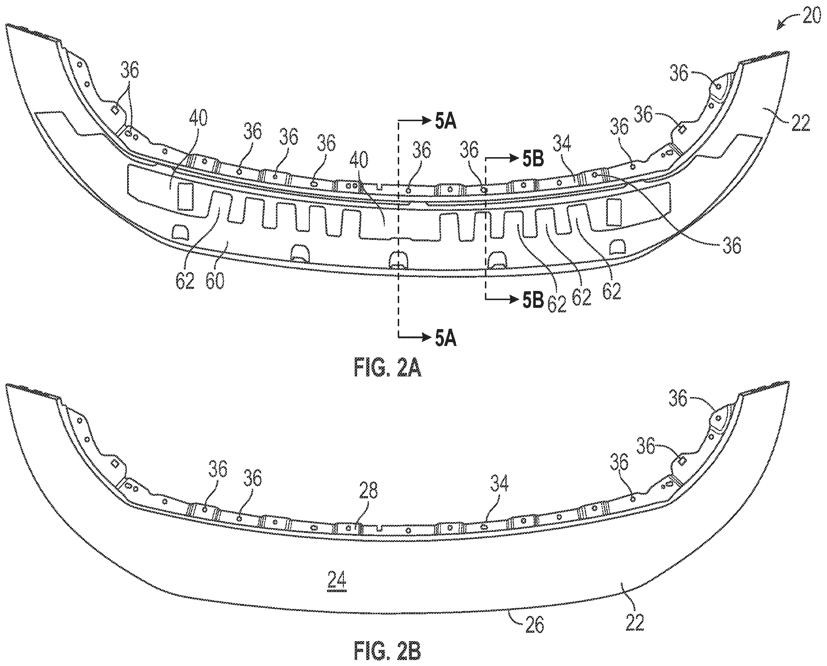

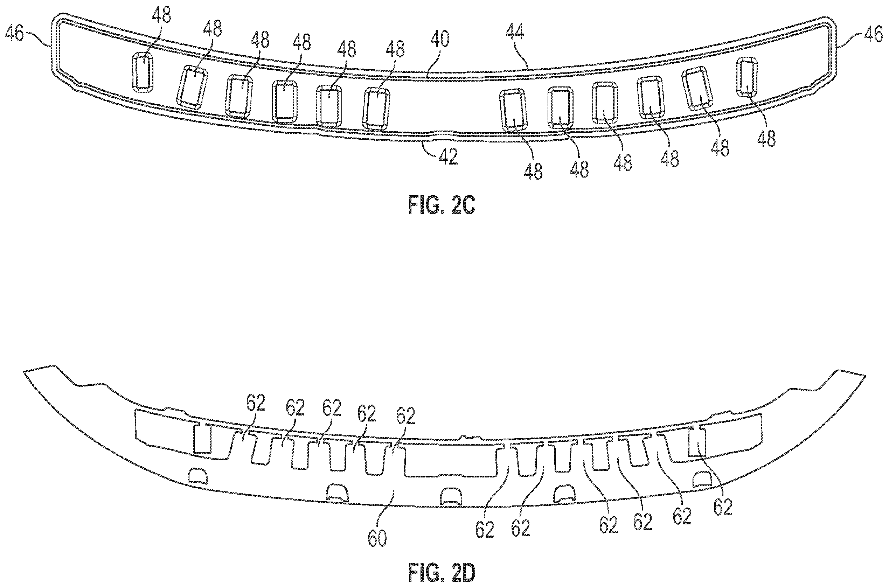

Referring now to Figs. 2A-2D, the applique 20 is illustrated in greater detail. The applique assembly 20 includes an outer member, the class A surface 24 is illustrated in Fig. 2B. The class A surface is the finished outer surface corresponding to Fig. 1.

The outer member 22 is elongated in the example. The outer member 22 is generally U-shaped and has a front edge 26 and a rear edge 28. The front edge 26 and the rear edge 28 are "front" and "rear" based on the direction and orientation relative to the vehicle. The rear edge 28 has a coupling edge 34 that is positioned recess relative to the finished surface 24. The coupling edge 34 is a flange that extends nearly the entire rear edge 28. The coupling edge 34 has a plurality of openings 36 that are used to receive fasteners to secure the applique assembly 20 to the vehicle. When the hood 12 is closed as best illustrated in Fig. 1, the coupling edge 34 is disposed between the hood and a mounting cross member as described in greater detail below. In this example, the outer member 22 is composed of thermoplastic polyolefin.

The applique assembly 20 includes an elongated structural member 40. The elongated structural member 40 extends nearly the width of the outer member 22 in this example. That is, the elongated structural member 40 is not as wide as the outer member 22, in this example. The elongated structural member 40 has a width that corresponds to the regulated head impact zone.

The elongated structural member 40 has a continuous front edge 42 and a continuous rear edge 44. The general shape of the elongated structural member is a slightly curved rectangular member. The elongated structural member 40 has lateral edges 46 which, in this example, are parallel to the longitudinal direction of the vehicle.

The elongated structural member 40 has a plurality of openings 48. The openings 48, in this example, are rectangles that are generally elongated in the direction of the longitudinal axis LA of the vehicle although some opening a slightly titled or offset relative to the longitudinal axis LA. The openings 48 are disposed on each side of the elongated structural member 40. That is, six openings 48 are located on each half of the elongated structural member 40.

The elongated structural member 40 is formed from 1.5mm thick mild steel in this example. Of course, other types of materials and thicknesses may be provided. Mild steel provides structural characteristics suitable for head impact.

The applique assembly 20 includes an inner member 60. The inner member 60 is illustrated as a separate component in Fig. 2D. However, the inner member 60 may be formed into a unitary structure by over molding the elongated structural member 40. That is, the elongated structural member 40 and the openings 48 therein may have the inner member 60 disposed at least partially therearound. The inner member 60 has extensions 62 that extend into each of the rectangular openings 48. In this example, the extension 62 is also rectangular. The inner member 60 is elongated and extends at a greater width than the elongated structural member 40 but shorter than the outer member 22. In this example, the inner member 60 is also composed of thermoplastic polyolefin. As will be described in greater detail, the inner member 60 and the outer member 22, for the most part, the inner member 60 and the outer member 22 has the elongated structural member 40 therebetween.

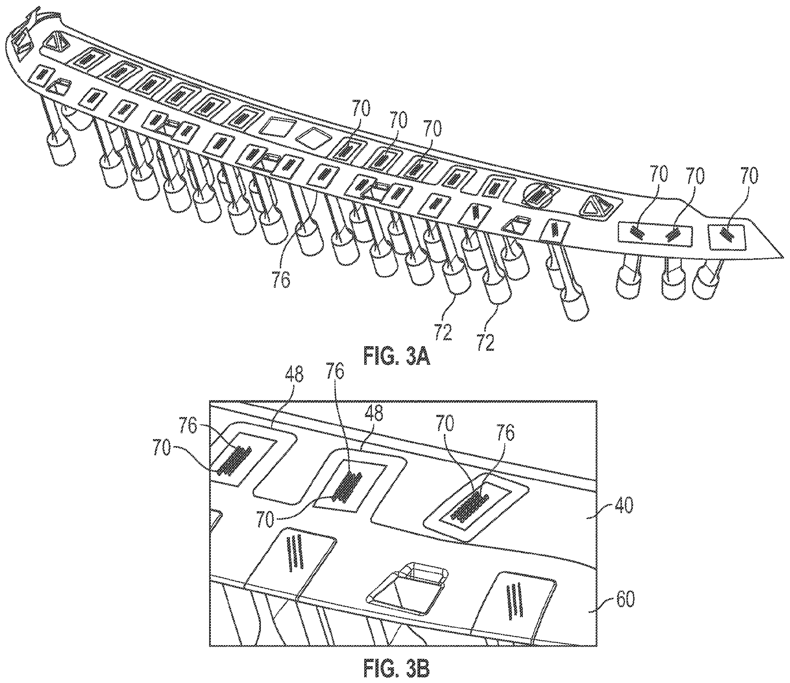

Referring now to Figs. 3A and 3B, the outer member 22 and the inner member 60 have sonic welds 70. In this example, each of the openings 48 have a sonic weld 70 therein. The sonic welds 70 are formed by a weld gun 72. A plurality of positions for the weld gun 72 are illustrated. The sonic weld 70 may also be formed at the front edge 26. In this example, eighteen sonic welds are illustrated along the front edge 26. Each of the openings 48 also have a sonic weld 70 disposed therein. As mentioned above, twelve rectangular openings 48 were used in this example. The sonic welds 70 may comprise a plurality of weld spots 76 that performed by the weld guns 72. Twelve guns may simultaneously form the weld spots 76. The materials for the outer member 22 and the inner member 60 are such to allow sonic welding to take place. However, other means for joining the outer member 22 and the inner member 60 are contemplated.

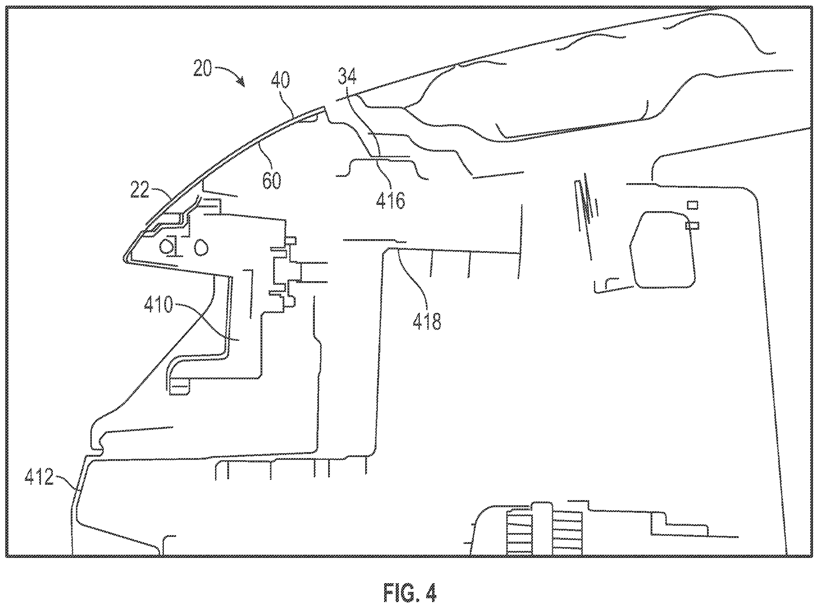

Referring now to Fig. 4, a cross section of the front of the vehicle 10 is illustrated with the applique assembly 20. A light grille housing 410 is illustrated within the fascia 412 of the vehicle 10. Above the fascia 412 is the applique assembly 20. The applique assembly 20 shows the outer member 22, the inner member 60 for which the elongated structural member 40 is disposed therein. However, in this example, the resolution does not illustrate the elongated structural member 40.

The outer member 22 has the coupling edge 34 that is mounted to an applique mounting cross member 416. The applique mounting cross member 416 is coupled to a fascia support 418.

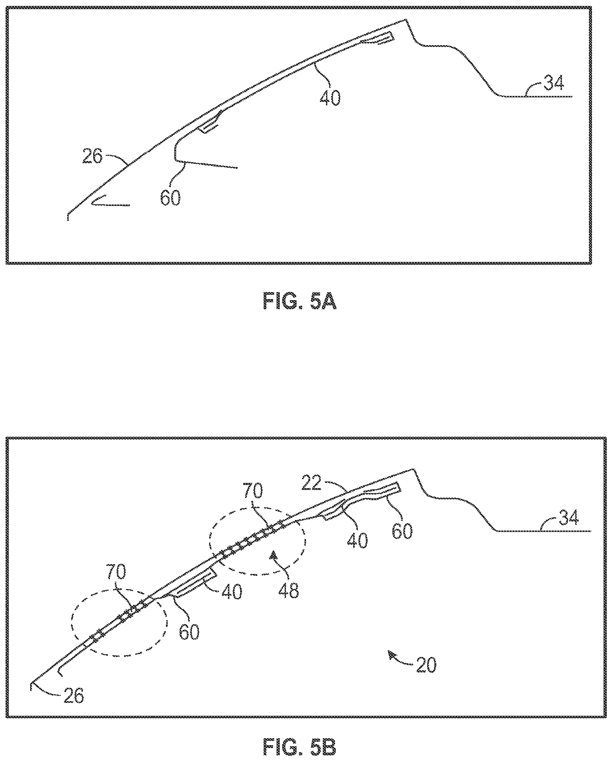

Referring now to Fig. 5A, the construction of the applique assembly 20 is illustrated in cross sectional views. The applique assembly 20 shows the outer member 22 relative to the sonic welds 70 as best illustrated in Fig. 5B. The sonic welds are along the front edge 26 of the outer member 22. The elongated structural member 40 is illustrated surrounded by the inner member 60. The coupling edge 34 is also illustrated in Fig. 5A and 5B. The openings 48 are also illustrated with the sonic welds 70.

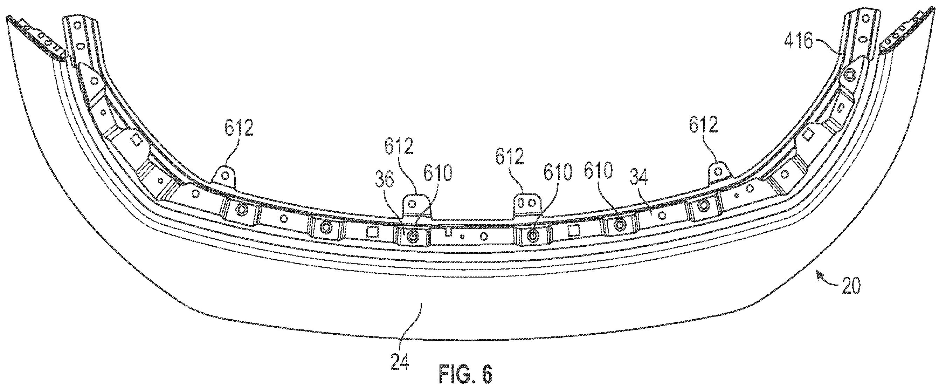

Referring now to Fig. 6, the cross member 416 is illustrated relative to the applique assembly 20. In this example, the coupling edge 34 has breakaway fasteners 610 that are used in fastener openings 36 to couple the applique assembly 20 to the cross member 416. The fasteners may be breakaway push pins that assist in meeting the head impact requirements. Flanges 612 extend from the cross member 416 to receive fasteners that mount the cross member to the vehicle structure such as the fascia support 418 illustrated in Fig. 4.

In operation, the elongated structural member 40 may be placed into a mold and the inner member 60 may be overmolded thereto. The overmolded elongated structural member 40 and the inner member 60 form an integrated structure that is fastened to the outer member 22 to form the applique assembly 20. Sonic welding at the sonic welds 70 may be used to secure the outer member 22 to the inner member 60.

Example embodiments are provided so that this disclosure will be thorough and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and ""they"" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be taken.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below", or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An applique assembly (20) for a vehicle (10) comprising:
an elongated structural member (40);
an inner member (60) coupled to the elongated structural member (40); and
an outer member (22) fixedly coupled to the inner member (60) at locations through the elongated structural member (40), said elongated structural member (40) disposed at least partially between the inner member (60) and the outer member (22).

2. The applique assembly (20) of claim 1 wherein the outer member (22) comprises a first unitary structure.

3. The applique assembly (20) of claim 1 wherein the inner member (60) and the elongated structural member (40) forms a unitary structure.

4. The applique assembly (20) of claim 1 wherein the outer member (22) has a coupling edge (34).

5. The applique assembly (20) of claim 4 wherein the coupling edge (34) comprises a plurality of fastener openings (36).

6. The applique assembly (20) of claim 5 wherein the coupling edge (34) is disposed on a rear edge and is recessed relative to a finished surface of the outer member (22).

7. The applique assembly (20) of claim 1 wherein the inner member (60) is composed of steel.

8. The applique assembly (20) of claim 1 wherein the inner member (60) is composed of mild steel.

9. The applique assembly (20) of claim 1 wherein the outer member (22) is composed of thermoplastic polyolefin.

10. The applique assembly (20) of claim 1 wherein the inner member (60) is composed of thermoplastic polyolefin.

11. The applique assembly (20) of claim 1 further comprising a plurality of sonic welds coupling the inner member (60) to the outer member (22).

12. The applique assembly (20) of claim 1 wherein the elongated structural member (40) comprises a plurality of rectangular openings (48).

13. The applique assembly (20) of claim 12 wherein the inner member (60) is coupled to the outer member (22) with sonic welds (70) within the rectangular openings (48).

14. The applique assembly (20) of claim 13 wherein the inner member (60) is coupled to the outer member (22) adjacent to a front edge of the inner member (60) at the sonic welds (70).

15. The applique assembly (20) of claim 1 wherein the inner member (60) is coupled to the outer member (22) within openings of the elongated structural member (40) and adjacent to a front edge of the inner member (60) at sonic welds (70).
